# EUROPEAN PATENT APPLICATION

(11) **EP 4 806 865 A1**
(43) Date of publication of application: **16.09.2026**
(21) Application number: 24888547.7
(22) Date of filing: 24.10.2024
(51) Int. Cl.: C04B 35/44, C04B 35/50, G02B 27/28

(54) **TERBIUM-CONTAINING PARAMAGNETIC GARNET TRANSPARENT CERAMIC AND MAGNETO-OPTIC DEVICE USING SAME**

(30) Priority: 08.11.2023 JP 2023190880
(71) Applicant: Shin-Etsu Chemical Co., Ltd., Tokyo 100-0005 (JP)
(72) Inventor: IKARI, Masanori, Annaka-shi, Gunma 379-0195 (JP); YAHAGI, Akira, Annaka-shi, Gunma 379-0195 (JP); MATSUMOTO, Takuto, Annaka-shi, Gunma 379-0195 (JP); KATAOKA, Yuki, Annaka-shi, Gunma 379-0195 (JP); TANAKA, Keita, Annaka-shi, Gunma 379-0195 (JP)
(74) Representative: HGF
(86) International application number: PCT/JP2024/037940
(87) International publication number: WO 2025/100250

(57) **Abstract**

Accurately provided are a terbium-containing paramagnetic garnet transparent ceramic usable for each output grade and a magneto-optical device using the same. The transparent ceramic of the present invention includes a sintered body containing a composite oxide represented by Expression (1) and 0.1% or less of SiO₂. (Tb_{1-x-y}YₓSc_{y})₃(Al_{1-z}Sc_{z})₅O₁₂ (1) (0.05 ≤ x ≤ 0.45, 0 < y < 0.1, 0.5 < 1 - x - y < 0.95, 0.001 < z < 0.15, 0 < y + z < 0.2) The terbium-containing paramagnetic garnet transparent ceramic has a rod shape with an outer diameter of R mm, which is 3.5 mm or greater and a length of 14 mm or greater, both end surfaces of the terbium-containing paramagnetic garnet transparent ceramic are subjected to precision polishing and an AR coating treatment at a wavelength of N nm, and an optical effective diameter r mm is 0.9 x R, an average insertion loss during incidence of a laser beam having an incident beam diameter of D mm and a wavelength of N nm in the optical effective diameter is 0.043 dB or less, inclusions and the like, each having a size of greater than 30 µm are not present in the optical effective diameter, and a sum of the numbers of the inclusions and the like, each having a size of 10 µm or greater in the optical effective diameter is 4 at most.

## Description

### TECHNICAL FIELD

The present invention relates to terbium-containing paramagnetic garnet transparent ceramics and to magneto-optical devices using the same, and more specifically, relates to terbium-containing paramagnetic garnet transparent ceramics suitable for constituting magneto-optical devices such as an optical isolator, and to magneto-optical devices using the same.

### BACKGROUND ART

In recent years, high output of a laser has become possible, and thus, the spread of a laser processing machines using a fiber laser has been remarkable. In addition, in a laser light source incorporated in the laser processing machine, a phenomenon in which a resonance state is destabilized and an oscillation state is disturbed when light from the outside is incident. In particular, when oscillated light is reflected by an optical system in the middle and returns to the light source, the oscillation state is significantly disturbed. In order to prevent the disturbance, an optical isolator is usually provided, for example, in front of the light source.

The optical isolator includes a Faraday rotator, a polarizer disposed on a light incident side of the Faraday rotator, and an analyzer disposed on a light emission side of the Faraday rotator. In addition, the Faraday rotator is used by applying a magnetic field in parallel to a traveling direction of light. In this case, a polarization line segment of light rotates only in a certain direction regardless of whether the light travels forward or backward in the Faraday rotator. Furthermore, the Faraday rotator is adjusted to a length that the polarization line segment of light rotates by exactly 45 degrees. Here, when polarization planes of the polarizer and the analyzer are deviated by 45 degrees in the rotation direction of the light traveling forward, the polarization of the light traveling forward is transmitted as the polarization aligns with the position of the polarizer and the position of the analyzer. In addition, the polarization of the light traveling backward rotates reversely by 45 degrees with respect to the deviation angle direction of the polarization plane of the polarizer shifted by 45 degrees from the position of the analyzer. Then, the polarization plane of the returning light at the position of the polarizer is shifted by 45 degrees - (-45 degrees) = 90 degrees with respect to the polarization plane of the polarizer, and the returning light cannot be transmitted through the polarizer. In this manner, the optical isolator functions to transmit and emit the light traveling forward, and to block the returning light traveling backward.

In recent years, a terbium-containing paramagnetic garnet transparent ceramic having a composition (Tb_{1-x-y}YₓSc_{y})₃(Al_{1-z}Sc_{z})₅O₁₂ has been widely used as a material used as the Faraday rotator constituting the optical isolator. For example, details of the composition and the transparency are described in JP 2019-199386 A (Patent Document 1) and WO 2022/054596 A (Patent Document 2).

In addition, details of a preparation method of the terbium-containing paramagnetic garnet transparent ceramic are described in JP 2019-104674 A (Patent Document 3), JP 2019-207340 A (Patent Document 4), JP 2019-199078 A (Patent Document 5), JP 2019-199079 A (Patent Document 6), WO 2022/054593 A (Patent Document 7), WO 2022/054515 A (Patent Document 8), JP 2023-064774 A (Patent Document 9), JP 2023-082887 A (Patent Document 10), JP 2023-128125 A (Patent Document 11), and the like.

Furthermore, details of the quality and the like are described in Patent Document 7, WO 2022/054595 A (Patent Document 12), WO 2022/085107 A (Patent Document 13), WO 2022/054592 A (Patent Document 14), WO 2022/054594 A (Patent Document 15), JP 2023-128117 A (Patent Document 16), and the like.

### REFERENCE DOCUMENT LIST

### PATENT DOCUMENTS

| | |
|---|---|
| Patent Document 1: | JP 2019-199386 A |
| Patent Document 2: | WO 2022/054596 A |
| Patent Document 3: | JP 2019-104674 A |
| Patent Document 4: | JP 2019-207340 A |
| Patent Document 5: | JP 2019-199078 A |
| Patent Document 6: | JP 2019-199079 A |
| Patent Document 7: | WO 2022/054593 A |
| Patent Document 8: | WO 2022/054515 A |
| Patent Document 9: | JP 2023-064774 A |
| Patent Document 10: | JP 2023-082887 A |
| Patent Document 11: | JP 2023-128125 A |
| Patent Document 12: | WO 2022/054595 A |
| Patent Document 13: | WO 2022/085107 A |
| Patent Document 14: | WO 2022/054592 A |
| Patent Document 15: | WO 2022/054594 A |
| Patent Document 16: | JP 2023-128117 A |

### SUMMARY OF THE INVENTION

### PROBLEM TO BE SOLVED BY THE INVENTION

Regarding the above-described terbium-containing paramagnetic garnet transparent ceramic, in actual industrial use, for example, there is a difference in optical quality standards of a Faraday rotator to be used, depending on the output power grade of the laser processing machine. Some contrast sources may be allowed within the optical effective diameter in low-output applications, and naturally, management of the size of the contrast sources becomes stricter in high-output applications. However, there is no document in the related art that mentions the optical quality of the Faraday rotator corresponding to such an output power grade.

Furthermore, in Patent Document 7, the effect of enabling the terbium-containing paramagnetic garnet transparent ceramic to be applied to a high-power laser with an output of greater than 100 W by defining the size or the number of contrast sources existing within the optical effective diameter is merely exemplified, and there is no suggestion that the size or the number of contrast sources can be varied depending on the output power grade of the laser processing machine.

The present invention has been made in view of the above-described circumstances, and an object of the present invention is to accurately provide a terbium-containing paramagnetic garnet transparent ceramic and a magneto-optical device using the same, which can be used for each output grade, by processing the terbium-containing paramagnetic garnet transparent ceramic into a rod shape, performing an AR coating treatment, and then defining the size and the number of contrast sources and the insertion loss of the beam in stages.

### MEANS FOR SOLVING THE PROBLEM

In order to achieve the above-described object, according to an aspect of the present invention, there is provided a terbium-containing paramagnetic garnet transparent ceramic including: a sintered body that contains a composite oxide represented by Expression (1) and greater than 0% by mass and 0.1% by mass or less of SiO₂ as a sintering additive,

(Tb_{1-x-y}YₓSc_{y})₃(Al_{1-z}Sc_{z})₅O₁₂ (1)

(in Expression (1), 0.05 ≤ x ≤ 0.45, 0 < y < 0.1, 0.5 < 1 - x - y < 0.95, 0.001 < z < 0.15, and 0 < y + z < 0.2)
in which the terbium-containing paramagnetic garnet transparent ceramic
has an outer diameter of R mm, which is 2.2 x D mm or greater and 3.5 mm or greater, when an incident beam diameter D mm is 1.6 mm or less,
   the terbium-containing paramagnetic garnet transparent ceramic is processed to have a rod shape with a length of 14 mm or greater, both end surfaces of the terbium-containing paramagnetic garnet transparent ceramic are subjected to precision polishing and an AR coating treatment at a wavelength of N nm, and
when an optical effective diameter r mm that is optically used is defined by Expression (2), an average insertion loss during incidence of a laser beam having the incident beam diameter of D mm and the wavelength of N nm in the optical effective diameter r mm is 0.043 dB or less, and $r = 0.9 \times R$
inclusions, different phases, and voids, each having a size of greater than 30 µm are not present in the optical effective diameter r mm, and a sum of the numbers of the inclusions, different phases, and voids, each having a size of 10 µm to 30 µm in the optical effective diameter r mm is 4 at most.

It is preferable that the average insertion loss be 0.035 dB or less, and a sum of the numbers of inclusions, different phases, and voids, each having a size of 10 µm to 30 µm in a circular region having the incident beam diameter D mm as a radius from a center of an optical surface is 1 at most.

It is more preferable that the average insertion loss is 0.030 dB or less, a sum of the numbers of inclusions, different phases, and voids, each having a size of 10 µm to 30 µm in the optical effective diameter r mm is 3 at most, and inclusions, different phases, and voids, each having a size of greater than 10 µm are not present in a circular region having the incident beam diameter D mm as a radius from a center of an optical surface.

Furthermore, the terbium-containing paramagnetic garnet transparent ceramic is configured to use a laser beam having an incident beam diameter expanded by an expander to D_{2 times} mm, which is twice the normal diameter, and has an outer diameter of R' mm, which is 2.2 x D_{2 times} mm or greater and 5 mm or greater, when the incident beam diameter D_{2 times} mm is 1.6 mm or greater,
the terbium-containing paramagnetic garnet transparent ceramic is processed to have a rod shape with a length of 14 mm or greater, both end surfaces of the terbium-containing paramagnetic garnet transparent ceramic are subjected to precision polishing and an AR coating treatment at a wavelength of N nm, and
when an optical effective diameter r' mm that is optically used is defined by Expression (3), an average insertion loss during incidence of a laser beam having a beam diameter of D_{2 times} mm and the wavelength of N nm in the optical effective diameter r' mm is 0.030 dB or less, $r ′ = 0.9 \times R ′$
it is preferable that a sum of the numbers of inclusions, different phases, and voids, each having a size of 10 µm to 30 µm in the optical effective diameter r mm be 2 at most, inclusions and different phases, each having a size of greater than 10 µm are not present in a circular region having a radius of 2 x D_{2 times} mm from a center of an optical surface, the number of the voids having a size of 10 µm to 30 µm in the circular region is 2 at most, and inclusions, different phases, and voids, each having a size of greater than 10 µm are not present in a circular region having a radius of D_{2 times} mm from the center of the optical surface.

According to another aspect of the present invention, there is provided a magneto-optical device including: the terbium-containing paramagnetic garnet transparent ceramic described above.

The magneto-optical device of the present invention may be an optical isolator that includes the terbium-containing paramagnetic garnet transparent ceramic as a Faraday rotator, includes a polarization material on front and back sides of an optical axis of the Faraday rotator, and is usable in a wavelength band of 0.9 µm or greater and 1.1 µm or less.

### EFFECTS OF THE INVENTION

As described above, by defining the average insertion loss and defining that inclusions, different phases, and voids with a predetermined size are not present in an optical effective diameter r mm or in a circular region having a radius of D mm, D_{2 times} mm, or 2 x D_{2 times} mm from the center of the optical surface, it is possible to accurately provide a terbium-containing paramagnetic garnet transparent ceramic and a magneto-optical device using the same, which can be used for each output grade, and it is possible to provide a magneto-optical device such as an appropriate optical isolator in accordance with application to a laser device or the like of various output grades.

### BRIEF DESCRIPTION OF THE DRAWINGS

[FIG. 1] This is a schematic cross-sectional view illustrating a configuration example of an optical isolator using a terbium-containing paramagnetic garnet transparent ceramic as a Faraday rotator.
[FIG. 2] This is a metallographic image illustrating a contrast example of a class E, which is an example of an inclusion in Example.
[FIG. 3] This is a metallographic image illustrating a contrast example of a class E, which is an example of a different phase in Example.
[FIG. 4] This is a metallographic image illustrating a contrast example of a class E, which is another example of a different phase in Example.
[FIG. 5] This is a metallographic image illustrating a contrast example of a class E, which is an example of a void in Example.

### MODE FOR CARRYING OUT THE INVENTION

### 1. Terbium-containing paramagnetic garnet transparent ceramic

First, an embodiment of a terbium-containing paramagnetic garnet transparent ceramic according to the present invention will be described. The terbium-containing paramagnetic garnet transparent ceramic of the present embodiment includes a sintered body of a composite oxide containing terbium, yttrium, scandium, and aluminum, represented by Expression (1).

(Tb_{1-x-y}YₓSc_{y})₃(Al_{1-z}Sc_{z})₅O₁₂ (1)

(In Expression (1), 0.05 ≤ x ≤ 0.45, 0 < y < 0.1, 0.5 < 1 - x - y < 0.95, 0.001 < z < 0.15, and 0 < y + z < 0.2.)

It is preferable that the terbium-containing paramagnetic garnet transparent ceramic further contains greater than 0% by mass and 0.1% by mass or less of SiO₂ as a sintering additive. When the content of SiO₂ is in the above-described range, the transparency of the obtained paramagnetic garnet ceramic sintered body is improved to a level that can withstand practical use and is stable, which is preferable.

In the present embodiment, it is essential that main components of the 6-coordinate site and the 4-coordinate site in the garnet structure be aluminum (Al). When the main components of these sites can be composed of aluminum, the bonding property of the crystal is improved, and the average value of dn/dt at a wavelength of 1064 nm at 30°C ± 10°C can be reduced. The proportion of the aluminum in the 6-coordinate site and the 4-coordinate site is 1 - z (0.001 < z < 0.15).

In the present embodiment, terbium (Tb) and yttrium (Y) are selected as main components at the 8-coordinate site, and the concentration of terbium is set to 1 - x - y (0.5 < 1 - x - y < 0.95), and the concentration of yttrium is set to x (0.05 ≤ x ≤ 0.45).

In the present embodiment, scandium (Sc) is added in a concentration range of 0.001 < z < 0.15. In Expression (1), y is in a range of 0 < y < 0.1 and preferably 0.001 < y < 0.03. By adding scandium as described above, a highly transparent sintered body can be stably produced.

The terbium-containing paramagnetic garnet transparent ceramic of the present embodiment contains a component of the composition represented by Expression (1) as a main component. Here, the expression "contains as a main component" denotes containing 90% by mass or greater of the composite oxide represented by Expression (1). The content of the composite oxide represented by Expression (1) is preferably 99% by mass or greater, more preferably 99.9% by mass or greater, and still more preferably 99.99% by mass or greater.

The terbium-containing paramagnetic garnet transparent ceramic of the present embodiment is processed to have a length of 14 mm or greater, and is used as a target magneto-optical material. It is preferable that the length thereof be set to 14 mm or greater from the viewpoint that the incident light having a wavelength band of 0.9 µm or greater and 1.1 µm or less can be rotated by 45 degrees by correct magnetic circuit design although it depends on the configuration and the size of the magnet to be externally attached.

When an incident beam diameter D mm is 1.6 mm or less, an outer diameter R mm of the terbium-containing paramagnetic garnet transparent ceramic of the present embodiment is set to 2.2 x D mm or greater and 3.5 mm or greater.

The terbium-containing paramagnetic garnet transparent ceramic of the present embodiment is processed to have a rod shape with a length of 14 mm or greater, and is used as a target magneto-optical material. It is preferable that the length thereof be set to 14 mm or greater from the viewpoint that the incident light having a wavelength of 0.9 µm or greater and 1.1 µm or less can rotate by 45 degrees by correct magnetic circuit design, although this depends on the configuration and the size of the magnet to be externally attached. In addition, both end surfaces of the terbium-containing paramagnetic garnet transparent ceramic of the present embodiment are precision polished as optical surfaces.

When the optical effective diameter r mm optically used is defined by Equation (2), the average insertion loss during the incidence of a laser beam having an incident beam diameter of D mm and a wavelength of N nm in the optical effective diameter r mm is 0.043 dB or less in the terbium-containing paramagnetic garnet transparent ceramic of the present embodiment. $r = 0.9 \times R$

In the terbium-containing paramagnetic garnet transparent ceramic of the present embodiment, inclusions, different phases, and voids, each having a size greater than 30 µm are not present in the optical effective diameter r mm, and the sum of the numbers of the inclusions, different phases, and voids, each having a size of 10 µm to 30 µm in the optical effective diameter r mm is 4 at most. By defining the average insertion loss and the inclusions, different phases, and voids in this manner, a terbium-containing paramagnetic garnet transparent ceramic for a grade of up to an output of 40 W (up to an output of 30 W in practical use in consideration of safety) can be provided.

In addition, the average insertion loss is preferably 0.035 dB or less, and the sum of the numbers of the inclusions, different phases, and voids, each having a size of 10 µm to 30 µm in a circular region having the incident beam diameter D mm as a radius from the center of the optical surface is preferably 1 at most. In this manner, a terbium-containing paramagnetic garnet transparent ceramic for a grade of up to an output of 80 W (up to an output of 65 W in practical use in consideration of safety) can be provided.

Furthermore, the average insertion loss is more preferably 0.030 dB or less, the sum of the numbers of the inclusions, different phases, and voids, each having a size of 10 µm to 30 µm in the optical effective diameter r mm is 3 at most, and it is more preferable that inclusions, different phases, and voids, each having a size of greater than 10 µm not be present in the circular region having the incident beam diameter D mm as a radius from the center of the optical surface. In this manner, a terbium-containing paramagnetic garnet transparent ceramic for a grade of up to a laser output of 120 W (up to an output of 100 W in practical use in consideration of safety) can be provided.

In addition, it is still more preferable that the sum of the numbers of inclusions, different phases, and voids, each having a size of 10 µm to 30 µm in the optical effective diameter r mm be 2 at most, inclusions and different phases, each having a size of greater than 10 µm not be present in the circular region having a radius of 2 x D_{2 times} mm from the center of the optical surface, the number of voids having a size of 10 µm to 30 µm in the circular region is 2 at most, and inclusions, different phases, and voids, each having a size greater than 10 µm not be present in the circular region having a radius of D_{2 times} mm from the center of the optical surface. In this manner, a terbium-containing paramagnetic garnet transparent ceramic for a grade of up to a laser output of 240 W (up to an output of 200 W in practical use in consideration of safety) can be provided.

### 2. Method of producing terbium-containing paramagnetic garnet transparent ceramic

Next, an embodiment of a method of producing the terbium-containing paramagnetic garnet transparent ceramic according to the present invention will be described. The production method of the present embodiment includes a step of mixing oxides of each of terbium, yttrium, aluminum, and scandium to prepare a mixed raw material, a step of molding the mixed raw material to obtain a molded body, a step of debinding the molded body to obtain a degreased body, a step of sintering the degreased body to obtain a sintered body, a step of densifying the sintered body by a hot isostatic pressing (HIP) treatment, a step of annealing the densified sintered body, and a step of precision-polishing the annealed sintered body. Furthermore, when the HIP treatment is performed as it is, the paramagnetic garnet transparent ceramic is reduced, and slight oxygen vacancy occurs. Therefore, it is preferable to recover from the oxygen vacancy by performing a micro-oxidation HIP treatment or performing an annealing treatment in an oxidizing atmosphere after the HIP treatment. In this manner, a transparent garnet oxide ceramic having no oxygen vacancy absorption can be obtained. Hereinafter, each step will be described.

### 2-1. Preparation step of mixed raw material

As a raw material used in the present invention, an oxide powder of each of terbium, yttrium, scandium, and aluminum is used. The purity of the raw material here is preferably 99.9% by mass or greater and is particularly preferably 99.99% by mass or greater.

A predetermined amount of these elements is weighed, and the raw material further contains greater than 0% by mass and 0.1% by mass or less of silicon oxide (SiO₂), and is treated with a wet ball mill, a bead mill, or a jet mill, as appropriate.

In the garnet oxide powder raw material used in the present invention, various organic additives may be added for the purpose of improving the quality stability and the yield in a subsequent ceramic production step. In the present invention, these are not particularly limited. That is, various dispersants, binders, lubricants, plasticizers, and the like can be suitably used. However, it is preferable to select a high-purity type of these organic additives that do not contain unnecessary metal ions. In addition, the order of addition of each organic additive needs to be appropriately designed so as not to hinder the management of the properties (particle size distribution and the like) of the raw material to be produced.

### 2-2. Molding step

In the production method according to the present embodiment, a typical press molding step can be suitably used in the production method according to the present invention. That is, an extremely common uniaxial pressing step of filling a mold with the raw material and pressurizing the mold in a certain direction, a cold isostatic pressing (CIP) step of sealing and storing the raw material in a deformable waterproof container and pressurizing the raw material with a hydrostatic pressure, or a warm isostatic pressing (WIP) step can be suitably used. Furthermore, the applied pressure may be appropriately adjusted while confirming the relative density of a molded body to be obtained, and is not particularly limited. However, for example, when the pressure is managed in a range of about 300 MPa or less that can be handled by a commercially available CIP device or WIP device, the production cost may be suppressed. Alternatively, a hot pressing step, a spark plasma sintering step, a microwave heating step, or the like, in which sintering is performed at one time in addition to the molding step during molding, can also be suitably used. Furthermore, a molded body can also be prepared by a slip casting method instead of a press molding method. A molding method such as pressure cast molding, centrifugal cast molding, or extrusion molding can also be employed by optimizing the combination of the shape and the size of the oxide powder, which is the starting raw material, and various organic additives.

Furthermore, the preparation of the garnet transparent oxide ceramic material having a diameter of 4 mm according to the present invention by near net shaping can be achieved by, for example, using a uniaxial press molding jig having an inner diameter (⌀) of 7 mm. Furthermore, the length direction changes depending on the material and the size of the magnet surrounding the material, and thus, a longer molding jig may be prepared as the molding jig.

### 2-3. Debinding step

In the production method according to the present embodiment, a typical debinding step can be suitably used. That is, a thermal debinding step can be performed using a heating furnace. In addition, the type of the atmosphere gas here is not particularly limited, and air, oxygen, hydrogen, or the like can be suitably used. The debinding temperature is preferably in a temperature range in which the organic component of the organic additive to be added can be sufficiently decomposed and removed or higher and 1,000°C or lower.

### 2-4. Sintering step

In the production method according to the present embodiment, a typical sintering step can be suitably used. That is, a heating and sintering step using a resistive heating method, an induction heating method, or the like can be suitably used. In addition, the atmosphere here is preferably a reduced pressure environment (a vacuum). Furthermore, the degree of vacuum is preferably 1 x 10⁻³ Torr or less. It is preferable that the degree of vacuum be managed to be in the above-described range from the viewpoint that the desorbed oxygen gas from the degreased body can be sufficiently discharged to the outside of the system up to the central portion even when a large sintered body having a diameter (⌀) of 8 mm or greater is used.

The sintering temperature in the sintering step is preferably 1400°C to 1780°C and is particularly preferably 1500°C to 1750°C. It is preferable that the sintering temperature be in the above-described ranges from the viewpoint that densification is promoted while heterophase precipitation is suppressed.

The sintering holding time in the sintering step is sufficient for several hours, but the relative density of the sintered body is preferably managed in a range of 93.8% or greater and 97.2% or less. The management of the sintered density can be performed by repeating preliminary experiments several times.

### 2-5. Hot isostatic pressing (HIP) treatment step

In the production method according to the present embodiment, a hot isostatic pressing (HIP) treatment is performed after the sintering step to densify the sintered body until the relative sintered density of the sintered body reaches 99.9% or greater. When the management of the relative sintered density in the sintering step is appropriate, that is, when the HIP treatment can be performed in a state in which the sintered grain size is not excessively large, the HIP stress is widely and homogeneously transmitted from the outer peripheral portion to the central portion of the sintered body, the closed pores are crushed, and the sintered body is firmly densified. In other words, a substantially ideal sintered body in which stress unevenness is not present, unintended void unevenness is not present, and the amount of remaining small bubbles is small is obtained.

Furthermore, the type of pressurized gas medium here that can be suitably used is an inert gas such as argon or nitrogen, or Ar-O₂. The pressure at which the pressurized gas medium is pressurized is preferably 50 to 300 MPa and more preferably 100 to 300 MPa. When the pressure is less than 50 MPa, the transparency improvement effect may not be obtained, and when the pressure is greater than 300 MPa, further transparency improvement cannot be obtained even when the pressure is increased, and the load on the device may be excessive, which may lead to damage to the device. The applied pressure is preferably 196 MPa or less, for convenience, which can be understood to be treated with a commercially available HIP device.

In addition, the treatment temperature (predetermined holding temperature) at this time is set to be in a range of 1100°C to 1780°C and preferably in a range of 1200°C to 1730°C. When the heat treatment temperature is higher than 1780°C, the risk of oxygen vacancy occurring increases, which is not preferable. In addition, when the heat treatment temperature is lower than 1100°C, the transparency improvement effect of the sintered body is hardly obtained. Furthermore, the holding time of the heat treatment temperature is not particularly limited, but it is not preferable to hold the heat treatment temperature for a long time because the risk of oxygen vacancy occurring increases. Typically, the holding time is preferably set to be in a range of 1 to 3 hours.

Furthermore, the heater material, the heat insulating material, and the treatment container for performing the HIP treatment are not particularly limited, but graphite, molybdenum (Mo), tungsten (W), or platinum (Pt) can be suitably used, and yttrium oxide and gadolinium oxide can also be suitably used as the treatment container. In particular, it is preferable that the treatment temperature be 1500°C or lower from the viewpoint that platinum (Pt) can be used as the heater material, the heat insulating material, and in the treatment container, the pressurized gas medium can be set as Ar-O₂, and thus, the occurrence of oxygen vacancy during the HIP treatment can be prevented. When the treatment temperature is higher than 1500°C, graphite is preferable as the heater material and the heat insulating material, but in this case, it is preferable that any one of graphite, molybdenum (Mo), or tungsten (W) be selected as the treatment container, any one of yttrium oxide or gadolinium oxide is selected as a double container inside the container, and the container is filled with an oxygen-releasing material from the viewpoint that the amount of oxygen vacancy occurring during the HIP treatment can be minimized.

### 2-6. Re-sintering step

In the production method of the present embodiment, after the HIP treatment, a resintering treatment may be further performed at a temperature higher than the HIP treatment temperature, for 8 hours or longer. However, when the upper limit of the temperature is higher than 1780°C, the risk of oxygen vacancy occurring increases, which is not preferable. The resintering treatment time may be set to be longer as the laser output grade of the sintered body to be treated is higher.

### 2-7. Annealing treatment step

In the production method of the present embodiment, after completion of the resintering treatment, it is preferable to perform an oxidation annealing treatment (oxygen vacancy recovery treatment) in an oxygen atmosphere or in air at the HIP treatment temperature or lower, typically 1000°C to 1500°C, for the purpose of recovering from the oxygen vacancy in the obtained transparent ceramics sintered body. The holding time here is preferably set to be longer as the laser output grade to be used is higher. For example, the holding time is preferably 5 hours or longer when the ceramic is for the grade at a laser output of up to 40 W (up to 30 W in practical use in consideration of safety), the holding time is preferably 20 hours or longer when the ceramic is for the grade at a laser output of up to 80 W (up to 65 W in practical use in consideration of safety), and the holding time is preferably 40 hours or longer when the ceramic is for the grade at a laser output of up to 120 W (up to 100 W in practical use in consideration of safety).

### 2-8. Precision polishing step

In the production method of the present embodiment, it is preferable to perform precision polishing or optical polishing on both end surfaces of the paramagnetic garnet transparent ceramic that has undergone the above-described series of production steps, where both end surfaces are on the optical axis. When a measurement wavelength λ is 633 nm, the optical surface accuracy here is preferably λ/2 or less when the ceramic is for the grade at a laser output of up to 40 W (up to 30 W in practical use in consideration of safety) and particularly preferably λ/8 or less when the ceramic is for the grade at a laser output of up to 80 W (up to 65 W in practical use in consideration of safety) and a laser output of up to 120 W (up to 100 W in practical use in consideration of safety).

Furthermore, when an arithmetic average height Sa is less than or equal to 0.70 nm and a root mean square height Sq is less than or equal to 0.89 nm in terms of the average roughness of the precision-polished surface, the optical surface roughness at this time can correspond to all laser output grades, which is preferable.

Thereafter, when an AR coating (antireflection film) treatment is performed in accordance with the laser wavelength of the laser processing machine, a terbium-containing paramagnetic garnet transparent ceramic corresponding to all laser output grades can be provided.

### 3. Magneto-optical device

Furthermore, an embodiment of a magneto-optical device according to the present invention will be described. The magneto-optical device of the present embodiment includes the above-described terbium-containing paramagnetic garnet transparent ceramic. Specifically, it is preferable that the magneto-optical device be configured and used by applying a magnetic field in parallel with the optical axis of the terbium-containing paramagnetic garnet transparent ceramic and setting a polarizer and an analyzer in a manner that the optical axes thereof are shifted from each other by 45 degrees. In particular, the terbium-containing paramagnetic garnet transparent ceramic is suitably used as a Faraday rotator of an optical isolator having a wavelength of 0.9 to 1.1 µm as a magneto-optical device.

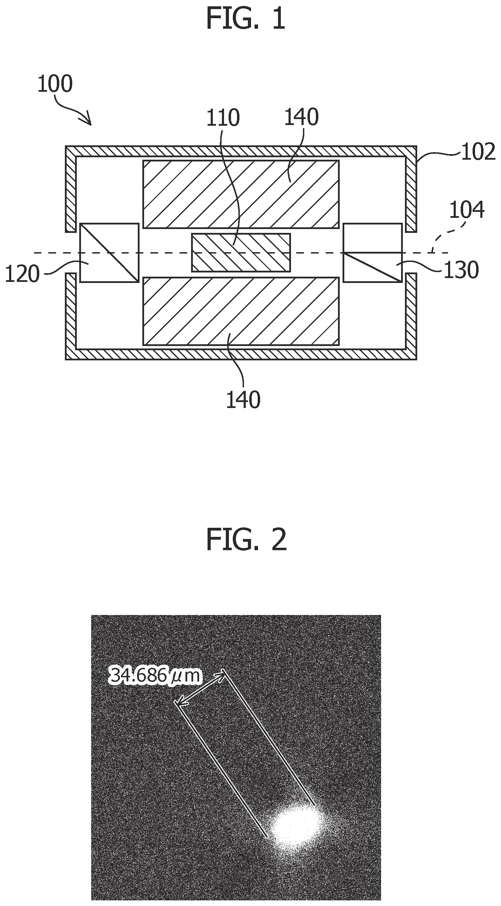

FIG. 1 is a cross-sectional view schematically illustrating an example of an optical isolator which is a magneto-optical device including a Faraday rotator formed of a paramagnetic garnet transparent ceramic as an optical element according to the present embodiment. As illustrated in FIG. 1, an optical isolator 100 includes a Faraday rotator 110 formed of the above-described paramagnetic garnet transparent ceramic, and a polarizer 120 and an analyzer 130 which are formed of a polarization material, inside a housing 150. These are disposed in order of the polarizer 120, the Faraday rotator 110, and the analyzer 130 along an optical axis 112 of the Faraday rotator. A polarizing vibration surface of the polarizer 120 and a polarizing vibration surface of the analyzer 130 are disposed in a manner that a relative angle is 45°. In addition, the optical isolator 100 includes a magnet 140 for applying a magnetic field to the Faraday rotator 110, which is provided on at least one of the side surfaces of the Faraday rotator 110 in the housing 150.

Such an optical isolator 100 can be suitably used for an industrial fiber laser device (not shown). The optical isolator can prevent reflected light of the laser light emitted from a laser light source from being returned to the light source and making the oscillation unstable.

### EXAMPLES

Hereinafter, the present invention will be described in more detail with reference to Examples and Comparative Examples, but the present invention is not limited to the Examples.

### Examples 1 to 17 and Comparative Examples 1 to 15

A terbium oxide powder, an yttrium oxide powder, and a scandium oxide powder (manufactured by Shin-Etsu Chemical Co., Ltd.), and an aluminum oxide powder (manufactured by Taimei Chemical Co., Ltd.) were obtained. Furthermore, a liquid of tetraethyl orthosilicate (TEOS) (manufactured by Kishida Chemical Co., Ltd.) was obtained. The purity of all the powder raw materials was 99.95% by mass or greater, and the purity of the liquid raw material was 99.999% by mass or greater. A composite oxide raw material having two types of final compositions listed in Table 1 was prepared using the above-described raw materials by adjusting the mixing ratio.

As a method of adjusting the mixing ratio, each oxide powder was weighed and mixed in a manner that the molar numbers of terbium, yttrium, aluminum, and scandium reached the molar ratios of the respective compositions in Table 1. Subsequently, TEOS was weighed and added to each raw material in a manner that the addition amount thereof reached the value in units of % by mass in terms of SiO₂ listed in Table 1.

**[Table 1]**

| | Composition | Sintering additive (in terms of SiO₂ in units of % by mass) |
|---|---|---|
| Composition 1 | (Tb_{0.79}Y_{0.2}Sc_{0.01})₃(Al_{0.98}Sc_{0.02})₅O₁₂ | 0.015 |
| Composition 2 | (Tb_{0.59}Y_{0.4}Sc_{0.01})₃(Al_{0.98}Sc_{0.02})₅O₁₂ | 0.015 |

Furthermore, each composition was subjected to a dispersing and mixing treatment in ethanol using an alumina ball mill device while taking care to prevent the compositions from being mixed together. The treatment time was set to 20 hours. Thereafter, each raw material mixture was subjected to a spray drying treatment to prepare a granular raw material having an average particle diameter of 20 µm. For each of the two types of obtained oxide raw materials, 100 molded bodies were prepared using a uniaxial press molding jig having an inner diameter of 7 mm. The raw material filling amount was adjusted in a manner that the length of each molded body was 30 mm. Thereafter, an isostatic pressing treatment was performed on all the molded bodies at a pressure of 198 MPa to obtain CIP molded bodies. All the obtained molded bodies were subjected to a debinding treatment in a muffle furnace under conditions of 800°C and 3 hours, thereby obtaining degreased molded bodies.

Subsequently, all the above-described degreased molded bodies were adjusted to be at a sintering temperature of 1500°C to 1570°C in a vacuum sintering furnace and treated for 3 hours, thereby obtaining sintered bodies having a sintered density of 93.8% or greater and 97.2% or less.

A HIP furnace equipped with a carbon heater was charged with each of the obtained sintered bodies, and the sintered bodies were subjected to a HIP treatment in an Ar atmosphere under conditions of 200 MPa, 1600°C, and 3 hours. All the obtained sintered bodies had a relative density of 99.9% or greater. In addition, the appearance of the sintered bodies was bluish gray (oxygen vacancy absorption).

Thereafter, all the HIP-treated sintered bodies were subjected to a heat treatment in a vacuum sintering furnace at a sintering temperature of 1730°C for 15 hours to attempt to eliminate residual air bubbles over the entire region including the central portion of each sintered body.

Subsequently, each of the obtained ceramic sintered bodies was subjected to an annealing treatment in an atmospheric heating furnace at 1450°C for 30 hours to sufficiently recover the oxygen vacancy.

Thereafter, each of the obtained ceramic sintered bodies was subjected to centerless outer peripheral grinding to adjust the outer diameter to 4 mm. In general, it is known that the finished size of the outer diameter of the sintered body varies depending on the variation in shrinkage degree. Therefore, in order to mount the sintered body on an optical device such as a fiber laser processing machine, it is preferable that the outer diameter be processed with high accuracy and be aligned.

Thereafter, all the sintered bodies were cut and subjected to a precision polishing treatment to be aligned to a length of 17 mm. Both optical end surfaces of the sample at this time had an optical surface accuracy of λ/8 (when the measurement wavelength λ was 633 nm) or less, and were finished in a manner that the arithmetic average height Sa was less than or equal to 0.70 nm and the root mean square height Sq was less than or equal to 0.89 nm in terms of the average roughness of the precision-polished surface.

Subsequently, both end surfaces of all the samples with the composition 1 were subjected to an AR coating (antireflection film) at a wavelength of 1030 nm, and both end surfaces of all the samples with the composition 2 were subjected to an AR coating at a wavelength of 1064 nm to prepare a series of evaluation samples.

For 100 samples each in a total of 200 samples obtained in the above-described manner, the positions and the number of contrast sources of inclusions, different phases, and voids were measured and counted by the following method.

### Method of observing contrast source

Whether or not inclusions, different phases, and voids, each having a size of greater than 30 µm were present was evaluated one by one using a metal microscope (manufactured by Carl Zeiss AG) in a transmission mode and an objective lens at a magnification of 1.25 times. In addition, when the presence was confirmed, all the samples were classified into a class E (Comparative Examples 8, 9, and 15).

Subsequently, whether or not inclusions, different phases, and voids, each having a size of greater than 10 µm and 30 µm or less were present was evaluated one by one using 5x and 10x objective lenses. In addition, when the presence was confirmed, all the positions (whether such inclusions, different phases, and voids were within or outside a circular region having the incident beam diameter D mm as a radius from the center of the optical surface) and the number of the inclusions, different phases, and voids were counted. In addition, all the samples in which the number of such inclusions, different phases, and voids was 5 or more were classified into a class D (Comparative Examples 4 to 7, 13, and 14), all the samples in which the number thereof was 4 or less and two or more were present within the circular region having the radius D mm were classified into a class C (Examples 7 to 9 and 15 to 17, and Comparative Examples 3 and 12), all the samples in which the number thereof was 4 or fewer and 1 or fewer was present within the circular region having a radius D mm were classified into a class B (Examples 4 to 6 and 12 to 14, and Comparative Examples 2 and 11), and all the samples in which the number thereof was 3 or fewer and none were present within the circular region having the radius D mm (0) were classified into a class A (Examples 1 to 3 and 9 to 11, and Comparative Examples 1 and 10).

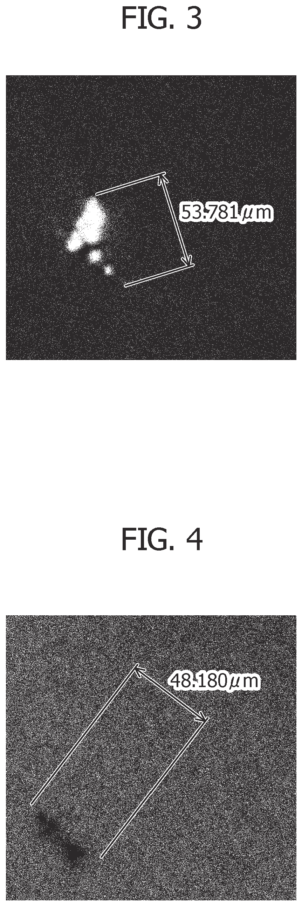

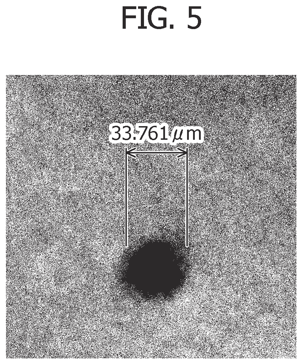

For reference, contrast examples of inclusions, different phases, and bonds observed using a metal microscope (manufactured by Carl Zeiss AG) in the transmission mode are illustrated in FIGS. 2 to 5. Furthermore, all of these contrast examples correspond to observation examples of the class E in which all the inclusions, different phases, and voids had a size of greater than 30 µm.

Subsequently, the insertion loss was measured for each of the group with the composition 1 at a wavelength of 1030 nm and the group with the composition 2 at a wavelength of 1064 nm by the following method.

### Method of measuring insertion loss

The insertion loss of the optical sample with an AR coating was measured as follows with reference to JIS C 61300-3-2.

An optical system was produced in-house using a laser light source having a wavelength of 1030 nm and 1064 nm (manufactured by NKT Photonics), a collimator lens, a polarizer, an XY-axis movable automatic work stage, an analyzer, a power meter (manufactured by Gentec), and a Ge photodetector. Here, the beam diameter incident on the measurement sample was set to about ⌀1 mm by adjusting the NA of the collimator lens that receives the diffused beam emitted from the fiber end surface attached to the laser light source (manufactured by NKT Photonics) and the distance.

The insertion loss was measured under the above-described conditions as follows. First, parallel light emitted through the collimator lens was received by the Ge photodetector without passing through the sample, the intensity I₀' of light was read, the sample was placed, the XY jig automatic work stage was adjusted to set the beam at a position where the beam transmits through the substantial center of the measurement sample, and then the light receiving intensity I' was measured again. Thereafter, the insertion loss was determined by calculation based on the following equation. $Insertion loss \left(dB\right) = - 10 \times {log}_{10} \left(I′/{I}_{0}′\right)$

The obtained value of the insertion loss was classified according to the following standards. That is, the sample in which the obtained value of the insertion loss was 0.030 dB or less was defined as a class 1 (Examples 1, 4, 7, 9, 12, and 15, and Comparative Example 4), the sample in which the obtained value of the insertion loss was greater than 0.030 dB and 0.035 dB or less was defined as a class 2 (Examples 2, 5, 8, 10, 13, and 16, and Comparative Examples 5, 8, and 13), the sample in which the obtained value of the insertion loss was greater than 0.035 dB and 0.043 dB or less was defined as a class 3 (Examples 3, 6, 9, 11, 14, and 17, and Comparative Examples 6, 14, and 15), and the sample in which the obtained value of the insertion loss was 0.043 dB or greater was defined as a class 4 (Comparative Examples 1, 2, 3, 7, 9, 10, 11, and 12).

As described above, the grouping was completed for the two types of compositions of the compositions 1 and 2. The obtained results are collectively listed in Table 2. As listed in Table 2, since Comparative Examples in which the number of the corresponding samples was 0 were also present in the current grouping, these were considered as n/a.

**[Table 2]**

| | Composition | Contrast group | Insertion loss group | Number of samples |
|---|---|---|---|---|
| Example 1 | 1 | Class A | Class 1 | 13 |
| Example 2 | 1 | Class A | Class 2 | 18 |
| Example 3 | 1 | Class A | Class 3 | 6 |
| Comparative Example 1 | 1 | Class A | Class 4 | 5 |
| Example 4 | 1 | Class B | Class 1 | 9 |
| Example 5 | 1 | Class B | Class 2 | 14 |
| Example 6 | 1 | Class B | Class 3 | 7 |
| Comparative Example 2 | 1 | Class B | Class 4 | 4 |
| Example 7 | 1 | Class C | Class 1 | 5 |
| Example 8 | 1 | Class C | Class 2 | 6 |
| Example 9 | 1 | Class C | Class 3 | 2 |
| Comparative Example 3 | 1 | Class C | Class 4 | 2 |
| Comparative Example 4 | 1 | Class D | Class 1 | 2 |
| Comparative Example 5 | 1 | Class D | Class 2 | 3 |
| Comparative Example 6 | 1 | Class D | Class 3 | 1 |
| Comparative Example 7 | 1 | Class D | Class 4 | 1 |
| n/a | 1 | Class E | Class 1 | 0 |
| Comparative Example 8 | 1 | Class E | Class 2 | 2 |
| n/a | 1 | Class E | Class 3 | 0 |
| Comparative Example 9 | 1 | Class E | Class 4 | 1 |
| Example 9 | 2 | Class A | Class 1 | 16 |
| Example 10 | 2 | Class A | Class 2 | 24 |
| Example 11 | 2 | Class A | Class 3 | 8 |
| Comparative Example 10 | 2 | Class A | Class 4 | 2 |
| Example 12 | 2 | Class B | Class 1 | 12 |
| Example 13 | 2 | Class B | Class 2 | 14 |
| Example 14 | 2 | Class B | Class 3 | 7 |
| Comparative Example 11 | 2 | Class B | Class 4 | 4 |
| Example 15 | 2 | Class C | Class 1 | 4 |
| Example 16 | 2 | Class C | Class 2 | 5 |
| Example 17 | 2 | Class C | Class 3 | 1 |
| Comparative Example 12 | 2 | Class C | Class 4 | 1 |
| n/a | 2 | Class D | Class 1 | 0 |
| Comparative Example 13 | 2 | Class D | Class 2 | 1 |
| Comparative Example 14 | 2 | Class D | Class 3 | 1 |
| n/a | 2 | Class D | Class 4 | 0 |
| n/a | 2 | Class E | Class 1 | 0 |
| n/a | 2 | Class E | Class 2 | 0 |
| Comparative Example 15 | 2 | Class E | Class 3 | 2 |
| n/a | 2 | Class E | Class 4 | 0 |

For each sample classified as described above, the beam quality (M²) and the beam diameter change rate were measured and evaluated at a plurality of incident power settings in the following manner.

### Evaluation method of beam quality (M²)

The measurement of the beam quality was performed by measuring the M² value with a Modemaster PC M² beam propagation analyzer (manufactured by Coherent Corp.) using collimated output variable CW laser light having a wavelength of 1070 nm and a diameter of 1.1 mm (manufactured by IPG Photonics Corporation) for both the compositions 1 and 2. Specifically, a work holder was set between the light source and the analyzer, a beam separator that attenuates the laser light intensity transmitted through the work holder to 1/1000 or less was placed in the subsequent stage, and the beam output-adjusted by the beam separator was introduced into the beam propagation analyzer. The distance between the reference plane (full surface bezel) of the beam propagation analyzer and the sample holder at this time was 1.9 m, and the distance between the reference plane and the collimator was 2.1 m.

According to the measurement procedure, first, the M² value of each original beam at an output intensity of 10 W, 20 W, 40 W, 80 W, or 120 W was measured, and the value at this time was defined as mₚ. Next, each sample having a length of 17 mm was disposed in the optical path, and the M² value of the transmitted light at each output intensity of 10 W, 20 W, 40 W, 80 W, or 120 W was measured and defined as nₚ. The beam quality in the present invention was evaluated by nₚ/mₚ. The beam quality was determined to be acceptable when the beam quality nₚ/mₚ was less than 1.04, and the beam quality was determined to be unacceptable when the beam quality nₚ/mₚ was 1.05 or greater. The maximum laser output intensity within the acceptable range of the same group was defined as the acceptable maximum output of the group.

### Evaluation method of beam diameter change rate

The measurement of the beam diameter change rate was performed using the same optical system as the beam quality evaluation measurement system described above. That is, using collimated output variable CW laser light having a wavelength of 1070 nm and a diameter of 1.1 mm (manufactured by IPG Photonics Corporation), the light was received by a Modemaster PC M² beam propagation analyzer (manufactured by Coherent Corp.), and the beam diameter on the reference plane (full surface bezel) was measured using the beam profile evaluation mode of the analyzer.

According to the measurement procedure, first, the beam diameter of each original beam at an output intensity of 10 W, 20 W, 40 W, 80 W, or 120 W was measured, and the value at this time was defined as r₀ₚ. Next, each sample having a length of 17 mm was disposed in the optical path, and the beam diameter of the transmitted light at each output intensity of 10 W, 20 W, 40 W, 80 W, or 120 W was measured and defined as rₚ. The beam diameter change rate in the present invention was calculated as |(1 - rₚ/r0ₚ)| x 100, and the beam diameter change rate was determined to be acceptable when the value was 10% or less, and the beam diameter change rate was determined to be unacceptable when the value was greater than 10%. The maximum laser output intensity within the acceptable range of the same group was defined as the acceptable maximum output of the group. The acceptance and rejection results for each class measured in the above-described manner are collectively listed in Table 3.

**[Table 3]**

| | Composition | Contrast group | Insertion loss group | Beam quality Acceptable maximum output | Beam diameter change rate Acceptable maximum output |
|---|---|---|---|---|---|
| Example 1 | 1 | Class A | Class 1 | 120 W | 120 W |
| Example 2 | 1 | Class A | Class 2 | 120 W | 80 W |
| Example 3 | 1 | Class A | Class 3 | 120 W | 40 W |
| Comparative Example 1 | 1 | Class A | Class 4 | 120 W | 20 W |
| Example 4 | 1 | Class B | Class 1 | 80 W | 120 W |
| Example 5 | 1 | Class B | Class 2 | 80 W | 80 W |
| Example 6 | 1 | Class B | Class 3 | 80 W | 40 W |
| Comparative Example 2 | 1 | Class B | Class 4 | 80 W | 20 W |
| Example 7 | 1 | Class C | Class 1 | 40 W | 120 W |
| Example 8 | 1 | Class C | Class 2 | 40 W | 80 W |
| Example 9 | 1 | Class C | Class 3 | 40 W | 40 W |
| Comparative Example 3 | 1 | Class C | Class 4 | 40 W | 20 W |
| Comparative Example 4 | 1 | Class D | Class 1 | 20 W | 120 W |
| Comparative Example 5 | 1 | Class D | Class 2 | 20 W | 80 W |
| Comparative Example 6 | 1 | Class D | Class 3 | 20 W | 40 W |
| Comparative Example 7 | 1 | Class D | Class 4 | 20 W | 20 W |
| Comparative Example 8 | 1 | Class E | Class 2 | 10 W | 80 W |
| Comparative Example 9 | 1 | Class E | Class 4 | 10 W | 20 W |
| Example 9 | 2 | Class A | Class 1 | 120 W | 120 W |
| Example 10 | 2 | Class A | Class 2 | 120 W | 80 W |
| Example 11 | 2 | Class A | Class 3 | 120 W | 40 W |
| Comparative Example 10 | 2 | Class A | Class 4 | 120 W | 20 W |
| Example 12 | 2 | Class B | Class 1 | 80 W | 120 W |
| Example 13 | 2 | Class B | Class 2 | 80 W | 80 W |
| Example 14 | 2 | Class B | Class 3 | 80 W | 40 W |
| Comparative Example 11 | 2 | Class B | Class 4 | 80 W | 20 W |
| Example 15 | 2 | Class C | Class 1 | 40 W | 120 W |
| Example 16 | 2 | Class C | Class 2 | 40 W | 80 W |
| Example 17 | 2 | Class C | Class 3 | 40 W | 40 W |
| Comparative Example 12 | 2 | Class C | Class 4 | 40 W | 20 W |
| Comparative Example 13 | 2 | Class D | Class 2 | 20 W | 80 W |
| Comparative Example 14 | 2 | Class D | Class 3 | 20 W | 40 W |
| Comparative Example 15 | 2 | Class E | Class 3 | 10 W | 40 W |

The results in Table 3 were further subjected to quality determination as follows. That is, in order to mount the terbium-containing paramagnetic garnet transparent ceramic of the present invention on an actual laser processing machine and to operate the machine normally, when a laser beam is incident on the ceramic, both the beam quality (M²) and the beam diameter change rate are required to be within the standards (the beam quality nₚ/mₚ is 1.04 or less, and the beam diameter change rate |(1 - rₚ/r0ₚ)| x 100 is 10% or less). Therefore, among the evaluation results in Table 3, the lower acceptable maximum laser output value was defined as the maximum laser output value of the class.

Then, the following results were obtained. That is, the terbium-containing paramagnetic garnet transparent ceramic in which the contrast group was the class A and the insertion loss group was the class 1 was applicable to a maximum laser output of 120 W, the terbium-containing paramagnetic garnet transparent ceramic in which the contrast group was the class B and the insertion loss group was the class 2 was applicable to a maximum laser output of 80 W, the terbium-containing paramagnetic garnet transparent ceramic in which the contrast group was the class C and the insertion loss group was the class 3 was applicable to a maximum laser output of 40 W, the terbium-containing paramagnetic garnet transparent ceramic in which the contrast group was the class D and the insertion loss group was the class 4 was only applicable to a maximum laser output of 20 W or less, and the terbium-containing paramagnetic garnet transparent ceramic in which the contrast group was the class E was applicable only to a maximum laser output of 10 W or less.

In actual operation, a common example is to provide a safety factor for the maximum laser output value. For example, a common example in which a sample having a maximum laser output value of 120 W is mounted on a laser processing machine of a commonly used 100 W class, a sample having a maximum laser output value of 80 W is mounted on a laser processing machine of a commonly used 65 W class, a sample having a maximum laser output value of 40 W is mounted on a laser processing machine of a commonly used 30 W class, and a sample only having a maximum laser output value of 20 W can be mounted only on a small laser processing machine of a commonly used 15 W class or less is provided.

### Examples 18 and 19 and Comparative Examples 16 to 19

Raw materials with the compositions in Table 1 were additionally prepared in the same manner as in Examples 1 to 17 and Comparative Examples 1 to 15. Furthermore, the slurry was dispersed, mixed, and subjected to a spray drying treatment in the same manner as in Examples 1 to 17 and Comparative Examples 1 to 15 to prepare granular raw materials having an average particle diameter of 20 µm.

For each of the two types of obtained oxide raw materials, 30 molded bodies were prepared, this time using a uniaxial press molding jig having an inner diameter of 10 mm. The raw material filling amount was adjusted in a manner that the length of each molded body was 30 mm. Thereafter, an isostatic pressing treatment was performed on all the molded bodies at a pressure of 198 MPa to obtain CIP molded bodies. All the obtained molded bodies were subjected to a debinding treatment in a muffle furnace under conditions of 800°C and 3 hours, thereby obtaining degreased molded bodies.

Subsequently, all the above-described degreased molded bodies were adjusted to be at a sintering temperature of 1500°C to 1570°C in a vacuum sintering furnace and treated for 3 hours, thereby obtaining sintered bodies having a sintered density of 93.8% or greater and 97.2% or less.

A HIP furnace equipped with a carbon heater was charged with each of the obtained sintered bodies, and the sintered bodies were subjected to a HIP treatment in an Ar atmosphere under conditions of 200 MPa, 1600°C, and 3 hours. All the obtained sintered bodies had a relative density of 99.9% or greater. In addition, the appearance of the sintered bodies was bluish gray (oxygen vacancy absorption).

Thereafter, all the HIP-treated sintered bodies were subjected to a heat treatment in a vacuum sintering furnace at a sintering temperature of 1730°C for 15 hours to attempt to eliminate residual air bubbles over the entire region including the central portion of each sintered body.

Subsequently, each of the obtained ceramic sintered bodies was subjected to an annealing treatment in an atmospheric heating furnace at 1450°C for 40 hours to sufficiently recover the oxygen vacancy.

Thereafter, each of the obtained ceramic sintered bodies was subjected to centerless outer peripheral grinding to adjust the outer diameter to 6.5 mm. Thereafter, all the ceramic sintered bodies were cut and subjected to a precision polishing treatment in a manner that the length was aligned to 16 mm. Both optical end surfaces of the sample at this time had an optical surface accuracy of λ/8 (when the measurement wavelength λ was 633 nm) or less, and were finished in such a manner that the arithmetic average height Sa was less than or equal to 0.70 nm and the root mean square height Sq was less than or equal to 0.89 nm in terms of the average roughness of the precision-polished surface.

Subsequently, both end surfaces of all the samples with the composition 1 were subjected to an AR coating (antireflection film) at a wavelength of 1030 nm, and both end surfaces of all the samples with the composition 2 were subjected to an AR coating at a wavelength of 1064 nm to prepare a series of evaluation samples.

For 30 samples each in a total of 60 samples obtained in the above-described manner, the positions and the number of contrast sources of inclusions, different phases, and voids were measured and counted using the same microscope as in Examples 1 to 17 and Comparative Examples 1 to 15, except that the inspection standard was changed to the following method.

Whether or not inclusions, different phases, and voids, each having a size of greater than 30 µm were present was evaluated one by one using a metal microscope (manufactured by Carl Zeiss AG) in a transmission mode and an objective lens at a magnification of 1.25 times. In addition, when the presence was confirmed, all the samples were discarded in the present example. The reason the samples were discarded is that, in the present example, since a test in which a high-power laser having a laser output of greater than 120 W was incident was performed, scattered light was radiated to the outside of the sample during the laser irradiation test when a large scattering source having a size of greater than 30 µm was present, and there was a risk of a fire occurring due to the heating of the surrounding objects by the scattered light in some cases.

Subsequently, whether or not inclusions, different phases, and voids, each having a size of greater than 10 µm and 30 µm or less were present was evaluated one by one using 5x and 10x objective lenses. In addition, when the presence was confirmed, all the positions (whether such inclusions, different phases, and voids were within a circular region having a radius of D_{2 times} mm, within a circular region having a radius of 2 x D_{2 times} mm, or outside a circular region having a radius of 2 x D_{2 times} mm) and the number of the inclusions, different phases, and voids were counted. In addition, in the present example, first, only a sample in which inclusions, different phases, and voids having a size of greater than 10 µm were not present in a circular region having a radius of D_{2 times} mm was extracted. The reason for this was the same as described above, and was to avoid a risk of heat generation and a risk of scattered light being incident on the eyes of the tester when a high-power laser having a power of greater than 120 W was incident, due to the generation of strong scattered light. Subsequently, a group in which inclusions and different phases, each having a size of greater than 10 µm were not present and the number of voids having a size of 10 µm to 30 µm was 2 or less in an optical region having a radius of greater than D_{2 times} mm and within 2 x D_{2 times} mm, and the sum of the numbers of inclusions, different phases, and voids, each having a size of 10 µm to 30 µm in an effective diameter outside the optical region having a radius of greater than 2 x D_{2 times} mm was 2 or less was classified into a class α (Examples 18 and 19 and Comparative Examples 16 and 18), and a sample in which the number of inclusions and different phases, each having a size of 10 µm to 30 µm was 1 or more, and a sample in which the number of voids having a size of 10 µm to 30 µm was 3 or more in an optical region having a radius of within 2 x D_{2 times} mm and a sample group in which the sum of the numbers of inclusions, different phases, and voids, each having a size of 10 µm to 30 µm was 3 or more in an effective diameter outside the optical region having a radius of greater than 2 x D_{2 times} mm, were all classified into a class β (Reference Examples 1 and 2 and Comparative Examples 18 and 19).

As a result, in the sample group with the composition 1, the number of the samples belonging to the class α was 7, the number of the samples belonging to the class β was 11, and the number of discarded samples was 12. In addition, in the sample group with the composition 2, the number of the samples belonging to the class α was 14, the number of the samples belonging to the class β was 13, and the number of discarded samples was 3.

Subsequently, the insertion loss was measured for each of the group with the composition 1 at a wavelength of 1030 nm and the group with the composition 2 at a wavelength of 1064 nm by the same method as in Examples 1 to 17 and Comparative Examples 1 to 15.

In addition, the obtained values of the insertion loss were classified according to the following standards. That is, a sample in which the obtained value of the insertion loss was 0.030 dB or less was classified into the class 1 (Examples 18 and 19 and Reference Examples 1 and 2), a sample in which the obtained value of the insertion loss was greater than 0.030 dB and 0.035 dB or less was classified into the class 2 (Comparative Examples 16 to 19), and a sample in which the obtained value of the insertion loss was greater than 0.035 dB was discarded. Here, the reason for discarding the sample was that, in the present example, since a test in which a high-power laser at a laser output of greater than 120 W was incident was performed, a sample having an absorption source or a scattering source in which the value of the insertion loss was greater than 0.035 dB generated abnormal heat during the laser irradiation test, or the scattered light was radiated to the outside of the sample, and there was a risk of a fire occurring due to the heating of the surrounding objects by the scattered light in some cases.

As described above, the grouping was completed for two types of compositions 1 and 2 in the present example. The obtained results are collectively listed in Table 4. Further, the insertion loss was not measured for the group that was discarded in the contrast group. In addition, further evaluation was not performed for the group that was discarded in the insertion loss group.

**[Table 4]**

| | Composition | Contrast group | Insertion loss group | Number of samples |
|---|---|---|---|---|
| Example 18 | 1 | Class α | Class 1 | 3 |
| Comparative Example 16 | 1 | Class α | Class 2 | 3 |
| Discard | 1 | Class α | Discard | 1 |
| Reference Example 1 | 1 | Class β | Class 1 | 6 |
| Comparative Example 17 | 1 | Class β | Class 2 | 4 |
| Discard | 1 | Class β | Discard | 1 |
| Discard | 1 | Discard | Not evaluated | 12 |
| Example 19 | 2 | Class α | Class 1 | 5 |
| Comparative Example 18 | 2 | Class α | Class 2 | 7 |
| Discard | 2 | Class α | Discard | 2 |
| Reference Example 2 | 2 | Class β | Class 1 | 6 |
| Comparative Example 19 | 2 | Class β | Class 2 | 6 |
| Discard | 2 | Class β | Discard | 1 |
| Discard | 2 | Discard | Not evaluated | 3 |

For each sample classified as described above, the beam quality (M²) and the beam diameter change rate were measured and evaluated by the same method as in Examples 1 to 17 and Comparative Examples 1 to 15 except that only the incident power setting was changed. The output intensity of the incident beam in the present example was set to three conditions of 120 W, 180 W, and 240 W. The acceptance and rejection results for each class measured in the above-described manner are collectively listed in Table 5.

**[Table 5]**

| | Composition | Contrast group | Insertion loss group | Beam quality Acceptable maximum output | Beam diameter change rate Acceptable maximum output |
|---|---|---|---|---|---|
| Example 18 | 1 | Class α | Class 1 | 240 W | 240 W |
| Comparative Example 16 | 1 | Class α | Class 2 | 240 W | 120 W |
| Reference Example 1 | 1 | Class β | Class 1 | 180 W | 240 W |
| Comparative Example 17 | 1 | Class β | Class 2 | 180 W | 120 W |
| Example 19 | 2 | Class α | Class 1 | 240 W | 240 W |
| Comparative Example 18 | 2 | Class α | Class 2 | 240 W | 120 W |
| Reference Example 2 | 2 | Class β | Class 1 | 180 W | 240 W |
| Comparative Example 19 | 2 | Class β | Class 2 | 180 W | 120 W |

For the results in Table 5, the quality determination was performed in the same manner as in Examples 1 to 17 and Comparative Examples 1 to 15 by defining the lower acceptable maximum laser output values as the maximum laser output values of the class. As a result, the following was summarized. First, the terbium-containing paramagnetic garnet transparent ceramic in which the contrast group was the class α and the insertion loss group was the class 1 was applicable to the maximum laser output of 240 W, the terbium-containing paramagnetic garnet transparent ceramic in which the contrast group was the class β and the insertion loss group was the class 1 was applicable to the maximum laser output of 180 W, and the terbium-containing paramagnetic garnet transparent ceramic in which the insertion loss group was the class 2 was applicable to the maximum laser output of 120 W.

Here, in the present example, the sample outer diameter was increased (outer diameter of 6.5 mm), and the beam diameter was further widened to 2 mm by an expander. All of these are elements have a negative effect of increasing the production cost. Then, the comparative example group with the maximum laser output of 120 W is not in line with such a cost increase.

Next, the terbium-containing paramagnetic garnet transparent ceramic in which the contrast group was the class β and the insertion loss group was the class 1 was applicable to the maximum laser output of 180 W. Whether or not the application power is in line with the cost increase is determined by the laser processing machine manufacturer that actually designed the laser processing machine, and thus, the determination was avoided as a reference example in the present patent.

Finally, the terbium-containing paramagnetic garnet transparent ceramic in which the contrast group was the class α and the insertion loss group was the class 1 was applicable to the maximum laser output of 240 W, and the output could be doubled to 240 W, which is twice the maximum laser output of 120 W in Examples 1 and 9. Therefore, this was determined as an example with a clear effect.

In actual operation, a common example is to provide a safety factor for the maximum laser output value. Therefore, it is considered appropriate to mount the sample with the maximum laser output value of 240 W on the laser processing machine of the commonly used 200 W class, and to mount the sample with the maximum laser output value of 180 W on the laser processing machine of the commonly used 150 W class.

Although the present invention has been described above based on the above-described embodiments, the present invention is not limited to such embodiments, and can be changed within the range that can be conceived by those skilled in the art, such as other embodiments, additions, changes, deletions, and the like, and is included in the scope of the present invention as long as the effects of the present invention are achieved in any aspect.

### REFERENCE SYMBOL LIST

- 100: Optical isolator
- 110: Faraday rotator
- 120: Polarizer
- 130: Analyzer
- 140: Magnet
- 150: Housing

## Claims

1. A terbium-containing paramagnetic garnet transparent ceramic comprising: a sintered body that contains a composite oxide represented by Expression (1) and greater than 0% by mass and 0.1% by mass or less of SiO₂ as a sintering additive,
(Tb_{1-x-y}YₓSc_{y})₃(Al_{1-z}Sc_{z})₅O₁₂ (1)
(in Expression (1), 0.05 ≤ x ≤ 0.45, 0 < y < 0.1, 0.5 < 1 - x - y < 0.95, 0.001 < z < 0.15, and 0 < y + z < 0.2)
wherein, the terbium-containing paramagnetic garnet transparent ceramic has an outer diameter of R mm, which is 2.2 x D mm or greater and 3.5 mm or greater, when an incident beam diameter D mm is 1.6 mm or less,
the terbium-containing paramagnetic garnet transparent ceramic is processed to have a rod shape with a length of 14 mm or greater, both end surfaces of the terbium-containing paramagnetic garnet transparent ceramic are subjected to precision polishing and an AR coating treatment at a wavelength of N nm, and
when an optical effective diameter r mm that is optically used is defined by Expression (2), an average insertion loss during incidence of a laser beam having the incident beam diameter of D mm and the wavelength of N nm in the optical effective diameter r mm is 0.043 dB or less, and $r = 0.9 \times R$
inclusions, different phases, and voids, each having a size of greater than 30 µm are not present in the optical effective diameter r mm, and a sum of the numbers of the inclusions, different phases, and voids, each having a size of 10 µm to 30 µm in the optical effective diameter r mm is 4 at most.

2. The terbium-containing paramagnetic garnet transparent ceramic according to claim 1, wherein the average insertion loss is 0.035 dB or less, and a sum of the numbers of the inclusions, different phases, and voids, each having a size of 10 µm to 30 µm in a circular region having the incident beam diameter D mm as a radius from a center of an optical surface is 1 at most.

3. The terbium-containing paramagnetic garnet transparent ceramic according to claim 1 or 2, wherein the average insertion loss is 0.030 dB or less, the sum of the numbers of the inclusions, different phases, and voids, each having a size of 10 µm to 30 µm in the optical effective diameter r mm is 3 at most, and inclusions, different phases, and voids, each having a size of greater than 10 µm are not present in a circular region having the incident beam diameter D mm as a radius from a center of an optical surface.

4. The terbium-containing paramagnetic garnet transparent ceramic according to claim 1, wherein, the terbium-containing paramagnetic garnet transparent ceramic
is configured to use a laser beam having an incident beam diameter expanded by an expander to D_{2 times} mm, which is twice a normal diameter, and has an outer diameter of R' mm, which is 2.2 x D_{2 times} mm or greater and 5 mm or greater, when the incident beam diameter D_{2 times} mm is 1.6 mm or greater,
the terbium-containing paramagnetic garnet transparent ceramic is processed to have a rod shape with a length of 14 mm or greater, both end surfaces of the terbium-containing paramagnetic garnet transparent ceramic are subjected to precision polishing and an AR coating treatment at a wavelength of N nm, and
when an optical effective diameter r' mm that is optically used is defined by Expression (3), an average insertion loss during incidence of a laser beam having a beam diameter of D_{2 times} mm and the wavelength of N nm in the optical effective diameter r' mm is 0.030 dB or less, and $r ′ = 0.9 \times R ′$
the sum of the numbers of inclusions different phases, and voids, each having a size of 10 µm to 30 µm in the optical effective diameter r mm is 2 at most, inclusions and different phases, each having a size of greater than 10 µm are not present in a circular region having a radius of 2 x D_{2 times} mm from a center of an optical surface, the number of the voids having a size of 10 µm to 30 µm in a circular region is 2 at most, and inclusions, different phases, and voids, each having a size of greater than 10 µm are not present in a circular region having a radius of D_{2 times} mm from the center of the optical surface.

5. A magneto-optical material comprising: the terbium-containing paramagnetic garnet transparent ceramic according to claim 1 or 4.

6. The magneto-optical device according to claim 5, wherein the magneto-optical device is an optical isolator that includes the terbium-containing paramagnetic garnet transparent ceramic as a Faraday rotator, includes a polarization material on front and back sides of an optical axis of the Faraday rotator, and is usable in a wavelength band of 0.9 µm or greater and 1.1 µm or less.
